# EUROPÄISCHE PATENTSCHRIFT

(11) **EP 3 192 637 B1**
(45) Veröffentlichungstag und Bekanntmachung des Hinweises auf die Patenterteilung: **02.09.2020**
(21) Anmeldenummer: 17150712.2
(22) Anmeldetag: 09.01.2017
(51) Int. Cl.: B29C 45/38, B26D 1/06, B26D 1/08, B29C 37/02

(54) **SCHNEIDSYSTEM**
CUTTING SYSTEM
SYSTÈME DE COUPE

(30) Priorität: 12.01.2016 DE 202016100101 U
(43) Veröffentlichungstag der Anmeldung: 19.07.2017
(73) Patentinhaber: Engelbreit & Sohn GmbH CNC-Zerspannung, 90552 Röthenbach (DE)
(72) Erfinder: ENGELBREIT, Philipp, 91207 Lauf (DE)
(74) Vertreter: FDST Patentanwälte

(56) Entgegenhaltungen:
- DE-A1-102009 027 996
- JP-A- 2000 127 089
- KR-B1- 101 192 376
- US-A1- 2009 320 665

## Beschreibung

Die Erfindung betrifft ein Schneidsystem, insbesondere zum Abtrennen eines Angussteils von einem Werkstück. Unter einem Angussteil ist bei einem Gussverfahren, insbesondere bei einem Spritzgussverfahren, ein Teil des Spritzlings zu verstehen, welcher nicht zu dem Formteil des Werkstücks gehört.

Insbesondere aus dem Kraftfahrzeugbereich ist es bekannt, je nach Ausstattungsvariante eines Kraftfahrzeugmodells funktionelle und/oder aus Gründen des Designs vorgesehene Kunststoffbauteile mit einer Chrom- und/oder Lackapplikation als Zierteil zu versehen. Diese Applikationen sind in der Regel ebenfalls Kunststoffbauteile, die mit einer Chrom- und/oder Lackschicht überzogen sind, und an den üblicherweise unbehandelten, funktionellen Kunstoffbauteilen im Sichtbereich angebracht sind. Die Applikationen sind dabei geometrisch vorzugsweise derart ausgeführt, dass optisch der Eindruck entsteht, dass das funktionelle Kunststoffbauteil selbst an der dafür vorgesehenen Stelle mit eben dieser Chrom- und/oder Lackschicht überzogen ist. Diese Maßnahme hat den Vorteil, dass im Rahmen der Variantenbildung lediglich die Applikation angepasst werden muss, während das zumeist größere funktionelle Kunststoffbauteil als Basisteil unverändert verwendet werden kann.

Derartige Applikationen werden als Werkstück üblicherweise in einem Gussverfahren, insbesondere in einem Spritzgussverfahren, hergestellt. Hierbei sind häufig Angussteile an dem Werkstück ausgebildet, die während des Gussverfahrens aufgrund der in den Zuführungskanälen der Gießform erstarrten Schmelze entstehen. Derartige Angussteile sind insbesondere bei Applikationen häufig optisch unansehnlich und daher unerwünscht, und werden zur Weiterverarbeitung des Werkstücks in einem gesonderten Verfahren von dem Werkstück abgetrennt. Hierbei ist es wichtig, dass das Angussteil möglichst vollständig und dennoch ohne Beschädigung der Material- und/oder Oberflächenstruktur des Werkstücks abgetrennt wird.

Zur Abtrennung des Angussteils von dem Werkstück ist es beispielsweise denkbar, das Angussteil am Werkstück abzubrechen. Ein derartiger Abbruch weist jedoch meist unsaubere und optisch unansehnliche Fehlstellen in der Oberfläche des Werkstücks auf, wodurch der Einsatz für Zierteil-Applikationen im Wesentlichen ungeeignet ist. Des Weiteren sind zerspanende Entfernungsverfahren zur Abtrennung üblich. Nachteiligerweise entstehen während des Zerspanungsvorgangs (Span-)Partikel, die aufgrund statischer Aufladung an dem Werkstück anheften können, und so die Weiterverarbeitung des Werkstücks erschweren oder unmöglich machen.

Ein spanfreies Abtrennverfahren ist beispielsweise das Laserschneiden, wobei ein hochenergetischer Laserstrahl das Angussteil von dem Werkstück abtrennt. Laserschneiden eignet sich jedoch nicht für den Einsatz bei Applikationen, da die meist metallische oder verchromte Lacksicht den Laserstrahl reflektiert, und somit das Angussteil nicht von dem Werkstück abgetrennt werden kann.

Ebenso sind sogenannte Schneidzangen beziehungsweise Schneidscheren im Einsatz, bei welchen das Angussteil entlang einer Schnittkante zwischen zwei Schneidmessern von dem Werkstück spanfrei abgetrennt wird. Hierzu wird das Werkstück, beispielsweise von einem roboterartigen Greifer, gehalten und in den Bereich der Schnittkante bewegt. Anschließend werden ein oder beide Schneidmesser aufeinander zubewegt und somit das Angussteil von dem im Wesentlichen freistehenden Werkstück mechanisch abgeschert.

Für ein präzises Schneiden ist hierbei eine möglichst exakte und insbesondere reproduzierbare Positionierung der Werkstücke relativ zu den Schneidmessern notwendig. In derartigen Anwendungen tritt häufig das Problem auf, dass aufgrund von Bewegungs- beziehungsweise Positionierungstoleranzen des Greifers die Werkstücke nicht exakt reproduzierbar positioniert werden. Dadurch ist es nicht möglich, die Angussteile zuverlässig sauber und gezielt vom Werkstück abzutrennen.

Aus der US 2009/0320665 A1 ist ein Schneidsystem zum Abtrennen eines Angussteils von einem Werkstück beschrieben, bei welchem eine Grundplatte mit einem feststehenden Gegenlager vorgesehen ist. Die Grundplatte weist weiterhin eine Führungsnut für einen Auflagekörper zur Halterung des Werkstücks auf. Der Auflagekörper wird mittels eines Feststellelements in der Führungsnut fixiert.

Der Erfindung liegt die Aufgabe zugrunde, ein besonders geeignetes Schneidsystem anzugeben, mit welchem ein zuverlässig sauberes und gezieltes Abtrennen möglich ist.

Die Aufgabe wird erfindungsgemäß gelöst mit den Merkmalen des Anspruchs 1. Vorteilhafte Ausgestaltungen und Weiterbildungen sind Gegenstand der Unteransprüche.

Das erfindungsgemäße Schneidsystem ist insbesondere zum vorzugsweise gezielten Abtrennen eines Angussteils von einem Werkstück geeignet und eingerichtet. Hierzu umfasst das Schneidsystem eine Grundplatte mit einem daran feststehend angeordneten Auflagekörper mit einem Gegenlager, insbesondere in Form eines Gegenmessers. Des Weiteren weist das Schneidsystem ein in Richtung des Gegenlagers bewegbares Trennmesser auf. Der Auflagekörper weist eine Auflagekontur für das Werkstück auf, die mit der Oberseite des Gegenlagers bündig ist oder diese überragt. Die Auflagekontur ist hierbei zweckmäßigerweise linienförmig und geeigneterweise an das Werkstück angepasst. Die Auflagekontur bildet somit vorzugsweise eine konturgetreue oder zumindest konturangepasste An- oder Auflage für das Werkstück. Durch die Auflagekontur erfolgt die Abtrennung des Angussteils stets definiert und reproduzierbar.

Das Schneidsystem ist vorzugsweise modular ausgeführt. Dies bedeutet, dass beispielsweise Grundplatten in verschiedenen Dimensionierungen sowie Auflagekörper mit unterschiedlich hohen Auflagekonturen bereitgestellt sind. Unter unterschiedlich hohen Auflagekonturen sind hierbei insbesondere Auflagekonturen zu verstehen, die der Oberseite des Gegenlagers in Axialrichtung, das heißt im Wesentlichen senkrecht zur Oberseite, unterschiedlich hoch emporstehen. Fluchten die Auflagekonturen bündig mit der Oberseite des Gegenlagers, so ist stets ein exakt bündiges Abtrennen des Angussteils vom Werkstück sichergestellt. Überragen die Auflagekonturen die Oberseite, so ist das Angussteil dadurch auf Wunsch oder bei Bedarf praktisch an beliebigen Stellen abtrennbar, wobei entsprechend ein Abschnitt des Angussteils am Werkstück verbleibt. Mit anderen Worten ist es möglich, durch Wahl eines geeigneten Auflagekörpers einen beliebigen Abschnitt des Angussteils am Werkstück zu belassen.

Zum Abtrennen des Angussteils wird das Werkstück zumindest teilweise an der Auflagekontur des Auflagekörpers abgestützt und beispielsweise mittels eines roboterartigen Greifers gehalten. Vorzugsweise ragt hierbei die gewünschte Abtrennposition des Angussteils vom Werkstück derart zwischen das Trennmesser und das Gegenlager, dass bei einer Bewegung des Trennmessers in Richtung des ortsfest an der Grundplatte befestigten Gegenlagers das Angussteil entlang einer zwischen den Trennmesser und dem Gegenlager gebildeten Schnittkante spanfrei von dem Werkstück abgeschert wird.

Im Gegensatz zum Stand der Technik ist das Werkstück somit während des Abtrennvorgangs nicht freistehend, sondern ist zumindest teilweise an der Auflagekontur abgestützt. Dadurch werden Bewegungs- und Positionierungstoleranzen des Greifers effektiv vermieden, sodass zuverlässig und reproduzierbar ein sauberes und spanfreies Abtrennen des Angussteils ermöglicht ist. Durch die Anlage an der Auflagekontur ist das Werkstück weiterhin derart abgestützt, dass es sich während eines Abtrennvorgangs im Wesentlichen nicht bewegt. Dadurch sind besonders exakte und reproduzierbare Schnitt- oder Abtrennkanten am Werkstück realisiert.

In einer bevorzugten Anwendungsform handelt es sich bei dem Werkstück beispielsweise um eine Chrom- und/oder Lackapplikation als Zierteil für ein Kraftfahrzeug. Durch den Einsatz eines erfindungsgemäßen Schneidsystems ist hierbei eine besonders saubere und optisch unauffällige Abtrennkante ermöglicht, sodass das Angussteil im Wesentlichen ohne Beschädigung der Material- oder Oberflächenstruktur von dem Werkstück abgetrennt wird. Das Schneidsystem ist jedoch prinzipiell auch für andere Anwendungen geeignet, beispielsweise zum insbesondere gratfreien Ablängen von Leiterplatten.

In einer geeigneten Weiterbildung ist die Auflagekontur als steg- oder linienartige Auflagekanten ausgestaltet, die beidseitig an dem Gegenlager angeordnet sind. In einer bevorzugten Ausgestaltung stehen die Auflagekanten dem Gegenlager im Bereich der Schnittkante in Richtung des Trennmessers über. Durch die Auflagekanten ist es somit ermöglicht, das Werkstück derart aufzulegen, dass das abzutrennende Angussteil im Wesentlichen freigestellt zwischen dem Gegenlager und dem Trennmesser positioniert ist. Mit anderen Worten greift das Schneidsystem somit tiefer in das Werkstück ein, sodass beispielsweise ein besonders bündiges Abtrennen, auch bei ungünstig angebrachten Angussteilen, ermöglicht ist.

In einer möglichen Ausbildung ist das Gegenlager des Auflagekörpers austauschbar. Die Austauschbarkeit des Gegenlagers ist hierbei dem modularen Aufbau des Schneidsystems zuträglich, sodass eine hohe Flexibilität hinsichtlich unterschiedlicher Werkstücke und/oder unterschiedlicher Angussteile ermöglicht ist. Zweckmäßigerweise wird hierbei auch das Trennmesser ausgetauscht, sodass die Schnittkanten des Trennmessers und des Gegenlagers aneinander angepasst sind. Durch ein einfaches Austauschen der Schneidwerkzeuge ist es daher möglich, sowohl breite als auch schmale Angussteile von dem Werkstück abzutrennen.

Ein zusätzlicher oder weiterer Aspekt der Erfindung sieht vor, dass das Trennmesser an einem Gleitelement angebracht ist. Das somit als ein Messerhalter wirkende Gleitelement ist hierbei zumindest teilweise in einem feststehend an der Grundplatte angeordneten Führungsblock gelagert. Durch das Gleitelement und den Führungsblock ist eine reproduzierbare Bewegung des Trennmessers in Richtung des Gegenlagers ermöglicht.

In einer zweckmäßigen Weiterbildung weist der Führungsblock eine das Gleitelement zumindest teilweise aufnehmende Aussparung auf. Die Aussparung ist vorzugsweise entlang der Bewegungsrichtung des Trennmessers orientiert und durchsetzt den Führungsblock insbesondere nutenartig. Die Aussparung und das Gleitelement sind hierbei im Montagezustand von einem insbesondere plattenartigen Führungsdeckel überdeckt. Das Gleitelement ist somit formschlüssig zwischen der Aussparung und dem Führungsdeckel eingefasst, und entlang der Bewegungsrichtung verschiebebeweglich gelagert. Dadurch ist eine besonders exakt reproduzierbare Bewegung des Trennmessers sichergestellt, was sich vorteilhaft auf die Qualität der Abtrennkanten zwischen dem Angussteil und dem Werkstück überträgt.

In einer vorteilhaften Ausführung ist das Trennmesser, insbesondere mittels des Gleitelements, an einen Hubantrieb gekoppelt. Der Hubantrieb ist vorzugsweise als ein pneumatischer Antrieb ausgeführt, wobei das Trennmesser beziehungsweise das Gleitelement mit einem Hubkolben oder einem Hubzapfen wirkverbunden ist. Der Hubantrieb wird beispielsweise mittels Druckluft betätigt, sodass der Hubkolben derart bewegt wird, dass das Trennmesser in eine Schließposition, das bedeutet, in eine das Angussteil am Gegenlager abtrennende Position, gefahren wird. Zum Verfahren in eine Öffnungsposition ist es beispielsweise denkbar, dass der Hubkolben mittels eines Federelements in eine öffnende Richtung mit einer Rückstellkraft beaufschlagt ist. Dadurch wird der Hubkolben bei einer Wegnahme der pneumatischen Beaufschlagung selbsttätig in eine öffnende Position bewegt.

Ebenso denkbar ist aber auch beispielsweise ein elektromotorischer Antrieb, wobei das Trennmesser beziehungsweise das Gleitelement entsprechend geeigneterweise an einem Läufer angeordnet ist. Das Verfahren in die Schließbeziehungsweise Öffnungsposition ist hierbei in einfacherweise durch Invertierung eines Versorgungsstroms realisierbar.

In einer geeigneten Ausgestaltung ist der Hubantrieb mittels einer Flanschplatte an der Grundplatte befestigt. Durch die Befestigung an der Grundplatte ist einerseits eine reproduzierbare und gezielte Hubbewegung sichergestellt. Andererseits ist insbesondere die Befestigung mittels der Flanschplatte dem modularen Aufbau des Schneidsystems zuträglich. Hierzu sind beispielsweise Flanschplatten in unterschiedlichen Größen vorgesehen, sodass, in Abhängigkeit von der Leistung und der damit einhergehenden Baugröße (Achshöhe), unterschiedliche Hubantriebe einsetzbar sind. Dies überträgt sich vorteilhaft auf die Flexibilität des Schneidsystems, sodass beispielsweise für das Abtrennen von vergleichsweise dicken Angussteilen ein leistungsstärkerer Hubantrieb mit einer größeren Baugröße verwendbar ist. Dadurch ist es möglich den Hubantrieb individuell an das Werkstück beziehungsweise das abzutrennende Angussteil anzupassen, sodass ein besonders effektiver Betrieb des Schneidsystems ermöglicht ist.

In einer besonders nützlichen Ausbildung weist die Grundplatte zumindest eine Führungsnut auf, an welcher der Auflagekörper und/oder der Führungsblock verschiebbar befestigt ist. Die Positionierbarkeit entlang der Führungsnut ermöglicht eine einfache und flexible Austauschbarkeit der Schneidsystemkomponenten hinsichtlich der modularen Ausgestaltung.

In einer bevorzugten Weiterbildung weist der Auflagekörper grundplattenseitig eine Fügekontur auf, die nach Art einer Nut-Feder-Verbindung in der Führungsnut einliegt. Dadurch ist der Auflagekörper stabil und verdrehfrei an der Grundplatte befestigbar. Mit anderen Worten ist der Auflagekörper beziehungsweise das von diesem getragene Gegenlager stets exakt in Richtung des Trennmessers ausgerichtet, sodass auch bei einem Auswechseln des Auflagekörpers eine gleichbleibende Schnittkantenqualität sichergestellt ist. In einer möglichen alternativen Weiterbildungsform liegt die Fügekontur beispielsweise nach Art einer Schwalbenschwanzverbindung in der Führungsnut ein.

In einer bevorzugten Ausführung ist das Trennmesser mittels des Hubantriebs linear gegenüber dem Gegenlager, das bedeutet parallel zur Grundplatte, bewegbar. Mit anderen Worten entspricht die Hubrichtung des Hubantriebs vorzugsweise der Bewegungsrichtung für den Abtrennvorgang. In dieser Ausführung ist der Hubkolben des Hubantriebs mit dem Gleitelement innerhalb des Führungsblocks achsparallel ausgerichtet, das bedeutet, dass eine gezielte lineare Bewegung des Trennmessers ausgeführt wird. Dadurch ist ein besonders großer Hub beziehungsweise eine besonders hohe Abtrennkraft oder Schneidkraft zwischen dem Trennmesser und dem Gegenlager ausübbar. Dadurch verbessern sich die Anwendungsmöglichkeiten des Schneidsystems, beispielsweise sind durch die verbesserte Schneidkraft auch klebende Angussteile problemlos vom Werkstück abtrennbar.

In einer alternativen Ausführungsform ist beispielsweise ein Kniehebel zwischen dem Hubantrieb und dem Gleitelement angeordnet, sodass das Trennmesser während eines Abtrennvorgangs eine in Wesentlichen rotierende Schwenkbewegung ausführt.

In einer möglichen Ausgestaltung ist der Auflagekörper des Gegenlagers in den Führungsblock des Gleitelements, insbesondere in den Führungsdeckel des Führungsblocks, integriert. Zweckmäßigerweise erfolgt der Abtrennvorgang in dieser Ausgestaltung insbesondere ziehend, das bedeutet, dass das Trennmesser im Wesentlichen um 180° gedreht an dem Gleitelement angeordnet ist, und bei einem Abtrennvorgang vom Hubantrieb auf das am Führungsblock angebrachte Gegenlager gezogen wird. In dieser Ausführung ist eine besonders kurze und materialsparende Grundplatte einsetzbar, da der Auflagekörper beziehungsweise die insbesondere linienartigen Auflagekanten an dem Führungsdeckel angeordnet sind, und somit lediglich der Führungsblock und die Flanschplatte zu befestigen sind.

In einer denkbaren Ausführung ist das Gegenlager als ein eine Werkstückaufnahme des Auflagekörpers überdeckender Schneidkeil ausgeführt. Dadurch ist der Eingriff des Schneidsystems in das Werkstück verbessert, sodass der Zugang zu ungünstig angebrachten Angussteilen verbessert wird.

Nachfolgend werden Ausführungsbeispiele der Erfindung anhand einer Zeichnung näher erläutert. Darin zeigen:
- Fig. 1: in einer perspektivischen Darstellung ein Schneidsystem mit einem Hubmotor,
- Fig. 2: in einer perspektivischen Darstellung das Schneidsystem ohne den Hubmotor,
- Fig. 3: in einer Explosionsdarstellung das Schneidsystem,
- Fig. 4: in einer perspektivischen Darstellung ausschnittsweise das Schneidsystems im Bereich einer Schnittkante zwischen einem Trennmesser und einem Gegenlager,
- Fig. 5: in einer perspektivischen Darstellung das Schneidsystem mit Blick auf die Unterseite,
- Fig. 6: in einer perspektivischen Darstellung das Trennmesser mit einem Gleitelement und einem Führungsblock,
- Fig. 7: in einer perspektivischen Darstellung das Gegenlager mit einem Auflagekörper,
- Fig. 8: in einer perspektivischen Darstellung eine Grundplatte des Schneidsystems,
- Fig. 9: in einer perspektivischen Darstellung das Schneidsystem mit einem alternativen Gegenlager,
- Fig. 10: in einer perspektivischen Darstellung die alternative Ausführungsform des Gegenlagers mit der Grundplatte,
- Fig. 11: in einer perspektivischen Darstellung ausschnittsweise die alternative Ausführungsform des Gegenlagers mit der Grundplatte,
- Fig. 12: in einer perspektivischen Darstellung eine alternative Ausgestaltung des Schneidsystems,
- Fig. 13: in einer Seitendarstellung den Hubmotor mit dem Gleitelement und dem Trennmesser des alternativen Schneidsystems, und
- Fig. 14: in einer perspektivischen Darstellung die Grundplatte, den Führungsblock und dem Gegenlager des alternativen Schneidsystems.

Einander entsprechende Teile und Größen sind in allen Figuren stets mit den gleichen Bezugszeichen versehen.

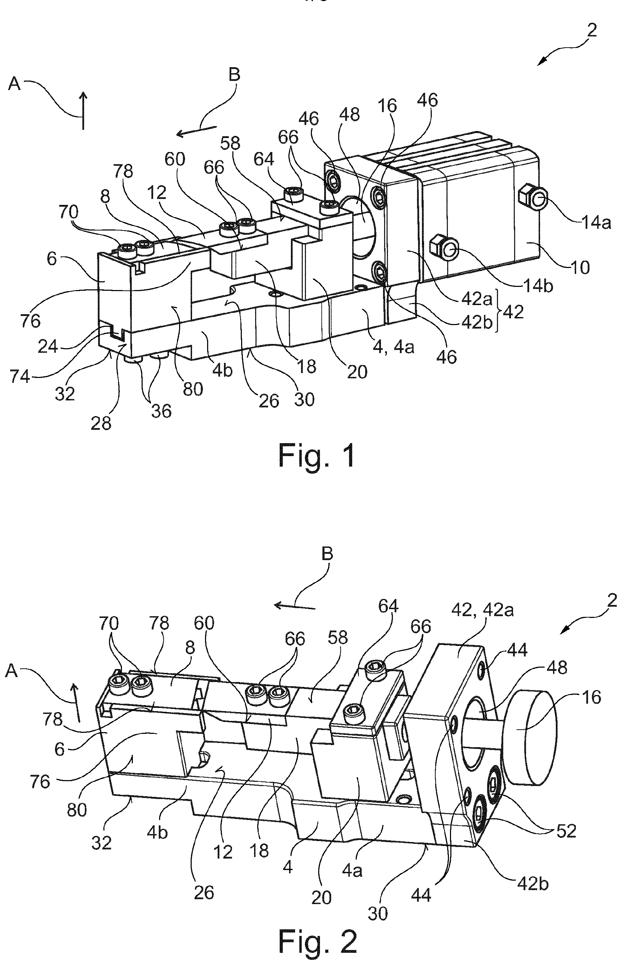

Das in der Fig. 1 und Fig. 2 dargestellte Schneidsystem 2 ist insbesondere für das gezielte Abtrennen von Angussteilen an einem Werkstück geeignet und eingerichtet. Bei dem Werkstück handelt es sich insbesondere um ein verchromtes Zierteil für ein Kraftfahrzeug.

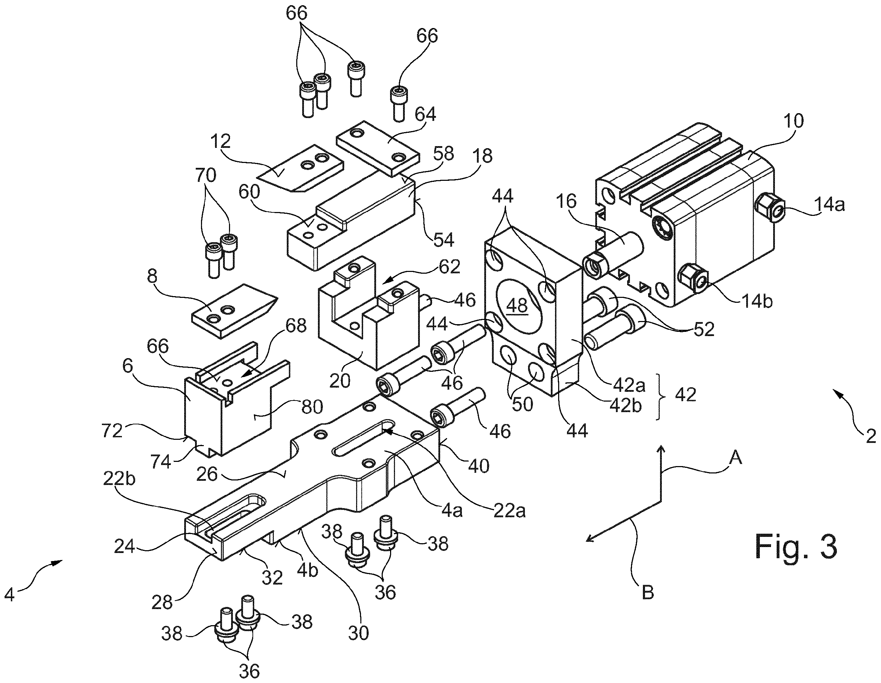

Fig. 3 zeigt das Schneidsystem 2 anhand einer Explosionsdarstellung in einem auseinandergenommenen Zustand. Wie in einer zusammenschauenden Betrachtung der Figuren 1 bis 8 vergleichsweise deutlich ersichtlich ist, umfasst das erfindungsgemäße Schneidsystem 2 eine etwa rechteckige Grundplatte 4, einen an der Grundplatte 4 befestigten Auflagekörper 6 mit einem Gegenlager 8, sowie ein mittels eines Hubantriebs 10 bewegbares Trennmesser 12. Der insbesondere pneumatische Hubantrieb 10 weist zwei seitliche Anschlüsse 14a und 14b für nicht näher dargestellte Druckluftleitungen auf, mittels denen ein Hubkolben 16 entlang einer Hub- oder Bewegungsrichtung B bewegbar ist.

Der Hubkolben 16 ist mit einem etwa rechteckigen Gleitelement 18 gekoppelt, an dem das Trennmesser 12 befestigt ist. Das Gleitelement 18 ist im Montagezustand zumindest teilweise in einem Führungsblock 20 geführt, beziehungsweise in diesem verschiebebeweglich gelagert. Gegenüberliegend zum Trennmesser 12 ist das Gegenlager 8 des Auflagekörpers 6 angeordnet. Das Gegenlager 8 ist in diesem Ausführungsbeispiel als ein Gegenmesser ausgestaltet und nachfolgend auch als solches bezeichnet.

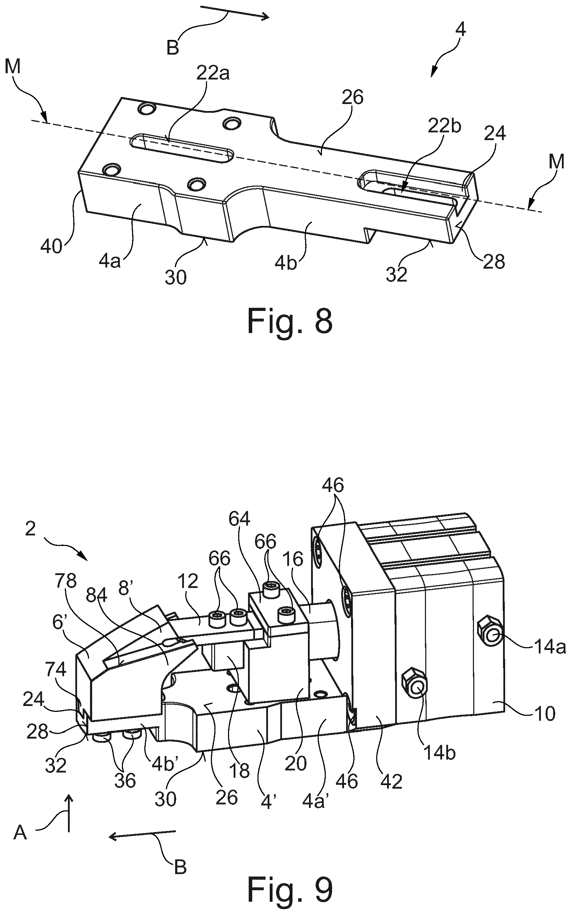

Die in der Fig. 8 einzeln dargestellte Grundplatte 4 weist zwei langlochartige Führungsnuten 22a und 22b auf. Die Grundplatte 4 umfasst im Wesentlichen eine etwa quadratische Befestigungsfläche 4a, an der ein hierzu vergleichsweise schmal ausgeführter Befestigungsschaft 4b einstückig entlang der Bewegungsrichtung B angeformt ist. Die Führungsnut 22a ist hierbei in der Befestigungsfläche 4a und die Führungsnut 22b in den Befestigungsschaft 4b eingelassen. Die Führungsnuten 22a und 22b sind hierbei entlang der Bewegungsrichtung B orientiert und achsparallel zueinander entlang einer Mittelachse M der Grundplatte 4 angeordnet.

Der Befestigungsschaft 4b weist im Bereich der Führungsnut 22b eine weitere Führungsnut 24 auf. Die Führungsnut 24 weist hierbei eine etwa rechteckige Querschnittsform auf, und ist in die Oberseite 26 der Grundplatte 4 eingebracht. Die Führungsnut 24 ist hierbei zur bewegungsrichtungsseitigen Stirnseite 28 der Grundplatte 4 hin offen.

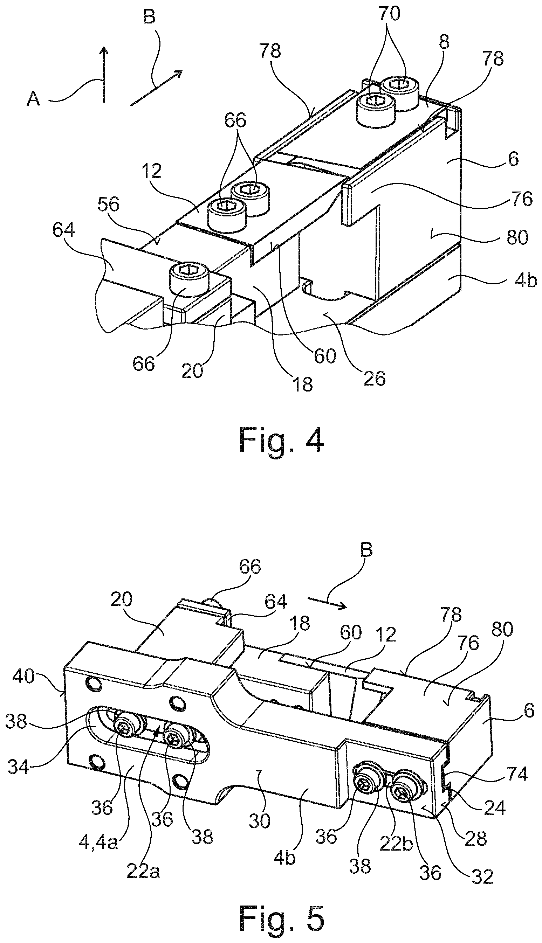

Wie anhand der Fig. 3 und der Fig. 5 näher dargestellt, ist die Unterseite 30 des Befestigungsschafts 4b im Bereich der Führungsnut 22b derart eingezogen, dass ein etwa stufenartiger Absatz 32 gebildet ist. Die Unterseite 30 der Befestigungsfläche 4a weist im Bereich der Führungsnut 22a eine langlochförmige Vertiefung 34 auf. Wie insbesondere in der Fig. 5 vergleichsweise deutlich wird, dienen der Absatz 32 und die Vertiefung 34 der Aufnahme von Schraubenköpfen von Befestigungsschrauben 36, sodass die Unterseite 30 der Grundplatte 4 eben auf einen Untergrund aufsetzbar ist.

Jeweils zwei Befestigungsschrauben 36 sind mit einer jeweils zugeordneten Unterlegscheibe 38 zur Befestigung des Führungsblocks 20 entlang der Führungsnut 22a einerseits, und zur Befestigung des Auflagekörpers 6 entlang der Führungsnut 22b andererseits, vorgesehen. Der Führungsblock 20 beziehungsweise der Auflagekörper 6 weisen hierzu zweckmäßigerweise nicht näher dargestellte, untergrundseitige, Gewindebohrungen auf, in welche die Befestigungsschrauben 36 verschraubt werden.

An der der Stirnseite 28 gegenüberliegenden Stirnseite 40 der Grundplatte 4 ist im Montagezustand des Schneidsystems 2 eine Flanschplatte 42 befestigt. Die nachfolgend näher beschriebene Flanschplatte 42 dient der Befestigung des Hubmotors 10 an der Grundplatte 4. Hierzu weist die Flanschplatte 42 einen etwa quadratischen Grundkörper 42a auf, in dessen vier Eckbereichen jeweils eine Aussparung 44 zur Aufnahme jeweils einer Befestigungsschraube 46 vorgesehen ist. Im Montagezustand ist der Hubmotor 10 mittels der Befestigungsschrauben 46 stirnseitig an der Flanschplatte 42 befestigt. Zweckdienlicherweise sind die Aussparungen 44 hierzu jeweils mit einem nicht näher bezeichneten Sackloch zur Aufnahme der Köpfe der Befestigungsschrauben 46 ausgeführt.

Der Grundkörper 42a der Flanschplatte 42 weist mittig eine zylindrische Aussparung 48 zur Hindurchführung des Hubkolbens 16 auf. Untergrundseitig ist ein etwa rechteckiger Befestigungsfortsatz 42b an den Grundkörper 42a monolithisch angeformt. Der Befestigungsfortsatz 42b weist zwei Aussparungen 50 zur Aufnahme jeweils einer Befestigungsschraube 52 auf, mit denen die Flanschplatte 42 an der Stirnseite 40 der Grundplatte 4 befestigt wird.

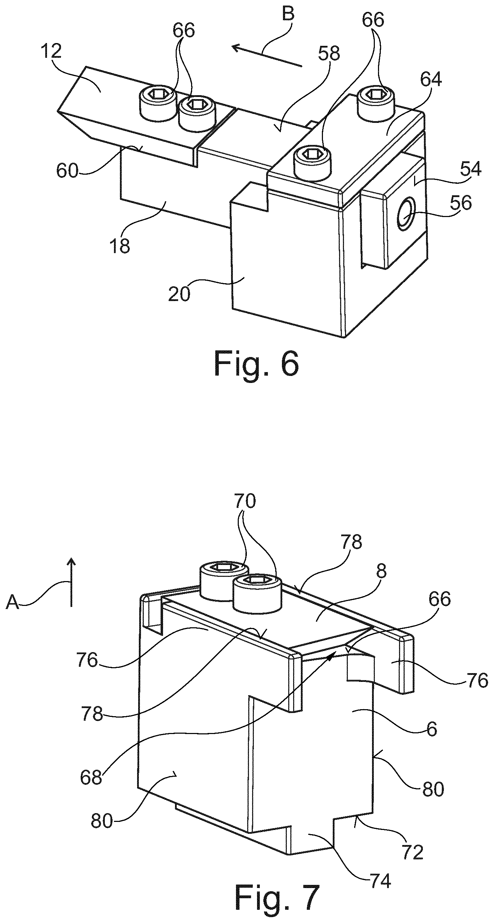

Wie in der Fig. 6 erkenntlich, weist das Gleitelement 18 an der hubantriebsseitigen Stirnseite 54 eine Aufnahme 56 für den Hubkolben 16 auf. Im Montagezustand ist der Hubkolben 16 mittels der Aufnahme 56 mit dem Gleitelement 18 kraft- und/oder formschlüssig steckverbunden. Dadurch wird die axiale Hubbewegung des Hubkolbens 16, und die damit wirkende Hubkraft, auf das Gleitelement 18 entlang der Bewegungsrichtung B übertragen. Auf der Oberseite 58 weist das Gleitelement 18 im Bereich des Trennmessers 12 einen eingezogenen Absatz 60 auf. Die dadurch gebildete Stufenhöhe zwischen der Oberseite 58 und dem Absatz 60 ist derart dimensioniert, dass im Montagezustand die Oberseite des Trennmessers 12 mit der Oberseite 58 des Gleitelements 18 fluchtet.

Das Gleitelement 18 ist entlang der Bewegungsrichtung B verschiebebeweglich im Führungsblock 20 gelagert. Hierzu weist der etwa rechteckige Führungsblock eine etwa U-förmige Aussparung oder Führungsnut 62 zur Aufnahme des Gleitelements 18 auf. Wie beispielsweise in Fig. 6 ersichtlich, sind die Führungsnut 62 und das Gleitelement 18 im Montagezustand von einem plattenartigen Führungsdeckel 64 überdeckt, der sich parallel zum horizontalen U-Schenkel der Führungsnut 62 über beide vertikale U-Schenkel erstreckt. Dadurch wird die nach oben hin geöffnete Aussparung zwischen den vertikalen U-Schenkeln abgedeckt.

Mit anderen Worten wird die Führungsnut 62 durch den Führungsdeckel 64 nach oben hin derart abgedeckt, dass das Gleitelement 18 im Wesentlichen formschlüssig zwischen den Seitenwänden der Führungsnut 62 einerseits und den Führungsdeckel 64 andererseits eingefasst ist. In dem dargestellten Ausführungsbeispiel weisen die Führungsnut 62 und das Gleitelement 18 eine im Wesentlichen quadratische Querschnittsform auf.

Das Trennmesser 12 ist mittels zweier Befestigungsschrauben 66 im Bereich des Absatzes 60 an dem Gleitelement 18 verdrehsicher fixiert. Hierzu sind die beiden Befestigungsschrauben 66 gestaffelt hintereinander entlang der Bewegungsrichtung B angeordnet, und an dem der Schneide beziehungsweise der Klinge abgewandten stumpfen Ende des Trennmessers 12 mit dem Absatz 60 verschraubt. Zwei weitere Befestigungsschrauben 66 sind zur Befestigung des Führungsdeckels 64 in entsprechende Gewindebohrungen der vertikalen U-Schenkel der Führungsnut 62 verschraubt.

Wie in der Fig. 4 besonders deutlich ersichtlich, ist der Auflagekörper 6 derart in der Führungsnut 22b befestigt, dass das Gegenmesser 8 dem Trennmesser 12 gegenüberliegend angeordnet ist. Mit anderen Worten sind die Schneiden des Gegenmessers 8 und des Trennmessers 12 aufeinander zugewandt, und auf der gleichen Höhe über der Oberseite 26 der Grundplatte 4 angeordnet. Das bedeutet, dass das Gegenmesser 8 und das Trennmesser 12 achsparallel entlang der Bewegungsrichtung B zueinander in einem axialen Abstand oberhalb der Grundplatte 4 positioniert sind.

Der in Fig. 7 gesondert dargestellte Auflagekörper 6 ist im Wesentlichen rechteckig, wobei das Gegenmesser 8 an einer Oberseite 66 des Auflagekörpers 6 in einer Aufnahme 68 mittels zweier Befestigungsschrauben 70 fixiert ist. Ähnlich zu dem Trennmesser 12 sind die Befestigungsschrauben 70 des Gegenmessers 8 gestaffelt entlang der Bewegungsrichtung B angeordnet, und an dem stumpfen Ende des Gegenmessers 8 mit der Aufnahme 68 verschraubt.

Auf der Unterseite 72 weist der Auflagekörper 6 mittig eine spundungsartig überstehende Führungskontur 74 auf. Die Führungskontur 74 erstreckt sich im Wesentlichen über die gesamte Länge des Auflagekörpers 6 und greift im Montagezustand verdrehsicher nach Art einer Nut-Feder-Verbindung in die Führungsnut 24 der Grundplatte 4 ein.

Die Aufnahme 68 des Auflagekörpers 6 ist im Wesentlichen gebildet durch zwei Auflagekanten 76, die der Oberseite 66 entlang einer Axialrichtung A emporstehen. Die Axialrichtung A ist im Wesentlichen senkrecht zur Bewegungsrichtung B orientiert und ist im Montagezustand normal zu der Grundplatte 4 gerichtet. Die beiden steg- oder linienartigen Auflagekanten 76 sind beidseitig zu dem Gegenmesser 8 entlang dessen Langseiten angeordnet, und bilden eine Auflagekontur beziehungsweise eine Auflagefläche 78 für das Werkstück. In dem dargestellten Ausführungsbeispiel ist die Auflagefläche 78 bündig beziehungsweise fluchtend mit der Oberseite des Gegenmessers 8 ausgeführt.

Die Auflagekanten 76 stehen den Auflagekörper 6 entlang der Bewegungsrichtung B in Richtung des Trennmessers 12 über. Mit anderen Worten weisen die Seitenflächen 80 des Auflagekörpers 6 somit eine im Wesentlichen L-förmige Geometrie auf, wobei der horizontale L-Schenkel durch die jeweilige Auflagekante 76 gebildet wird.

Bei einem Abtrennvorgang, bei welchem ein Angussteil von einem Werkstück abgetrennt wird, wird das Werkstück an der Auflagefläche 78 des Auflagekörpers 6 abgestützt und mittels eines nicht näher dargestellten Greifers fixiert. Das Angussteil ist hierbei durch die Auflagekanten 76 freigestellt und zwischen dem Gegenmesser 8 und dem Trennmesser 12 positioniert. Der Hubantrieb 10 wird mittels der angeschlossenen Druckluftleitungen betätigt und somit der Hubkolben 16, das Gleitelement 18, und das Trennmesser 12 entlang der Bewegungsrichtung B auf das feststehende Gegenmesser 8 zubewegt. Das Angussteil wird hierbei bündig und gezielt zwischen den Schneiden des Gegenmessers 8 und des Trennmessers 12 abgeschert, sodass am Werkstück eine exakte und optisch unscheinbare Schnittkante gebildet wird. Abschließend wird das Trennmesser 12 und das Gleitelement 18 mittels des Hubantriebs 10 in die Gegenrichtung bewegt, sodass ein neues Werkstück mit Angussteil in das Schneidsystem 2 einlegbar ist.

Vorzugsweise ist das Schneidsystem 2 modular nach Art eines Baukastenprinzips ausgeführt. Das heisst, dass beispielsweise die Grundplatte 4, der Auflagekörper 6, das Gleitelement 18 und die Flanschplatte 42 in verschiedenen Dimensionierungen hergestellt sind, so dass das Schneidsystem 2 individuell an ein jeweiliges Werkstück und/oder Angussteil anpassbar ist. Des Weiteren sind das Gegenmesser 8 und das Trennmesser 12 austauschbar an dem Auflagekörper 6 beziehungsweise dem Gleitelement 18 angebracht. Vorzugsweise sind hierbei die Führungsnuten 22a, 22b und 24 sowie der Führungsblock 20 als Gleichteile ausgeführt, sodass eine problemlose Kombination und Zusammenstellung des Schneidsystems 2 ermöglicht ist.

Beispielsweise ist es denkbar, dass unterschiedliche Auflagekörper 6 mit unterschiedlich hohen Auflagekanten 76 bereitgestellt sind. Dadurch ist es möglich das Angussteil auf Wunsch oder bei Bedarf praktisch an beliebigen Stellen vom Werkstück abzutrennen, wobei entsprechend ein Abschnitt des Angussteils am Werkstück verbleibt.

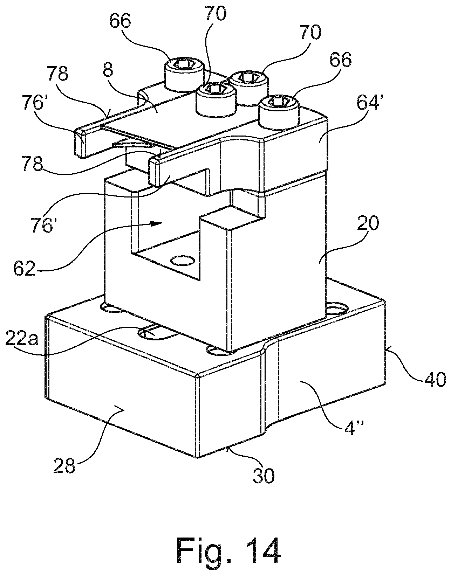

Anhand der Figuren 9 bis 14 ist der modulare Aufbau des Schneidsystems 2 nachfolgend näher erläutert.

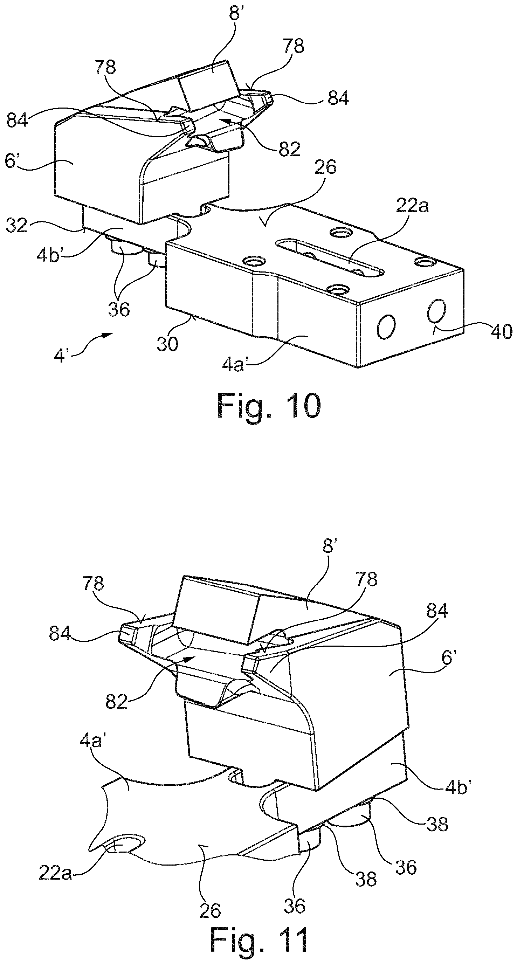

In den Figuren 9 bis 11 ist eine erste alternative Zusammenstellung des Schneidsystems 2 dargestellt. In diesem Ausführungsbeispiel ist ein leistungsstärkerer Hubantrieb 10 mittels der Flanschplatte 42 an die Grundplatte 4' befestigt. Im Vergleich zum ersten Ausführungsbeispiel weist die Grundplatte 4' - wie insbesondere in der Fig. 10 ersichtlich - einen verkürzten Befestigungsschaft 4b' auf.

Der Wesentliche Unterschied in dem Ausführungsbeispiel der Fig. 9 bis Fig. 11 ist der Aufnahmekörper 6'. Der Aufnahmekörper 6' weist einen Schneidkeil 8' als Gegenlager auf, der eine trennmesserseitige Werkstückaufnahme 82 überdeckt. Der Schneidkeil 8' ist hierbei vorzugsweise einstückig beziehungsweise monolithisch an den Aufnahmekörper 6' angeformt, sodass ein besonders stabiles und bauteilsparendes Gegenlager realisiert ist. Beidseitig zur Werkstückaufnahme 82 sind überstehende Auflagefortsätze 84 angeformt, die ähnlich zu den Auflagekanten 76 eine Auflagefläche beziehungsweise Auflagekontur 78 für das Werkstück ausbilden. Bei einem Abtrennvorgang wird das Werkstück zumindest teilweise in die Werkstückaufnahme 82 eingelegt und auf der Auflagefläche 78 abgestützt. Anschließend wird das Angussteil zwischen der Klinge des Trennmessers 12 und der Kante des Schneidkeils 8' vom Werkstück abgetrennt.

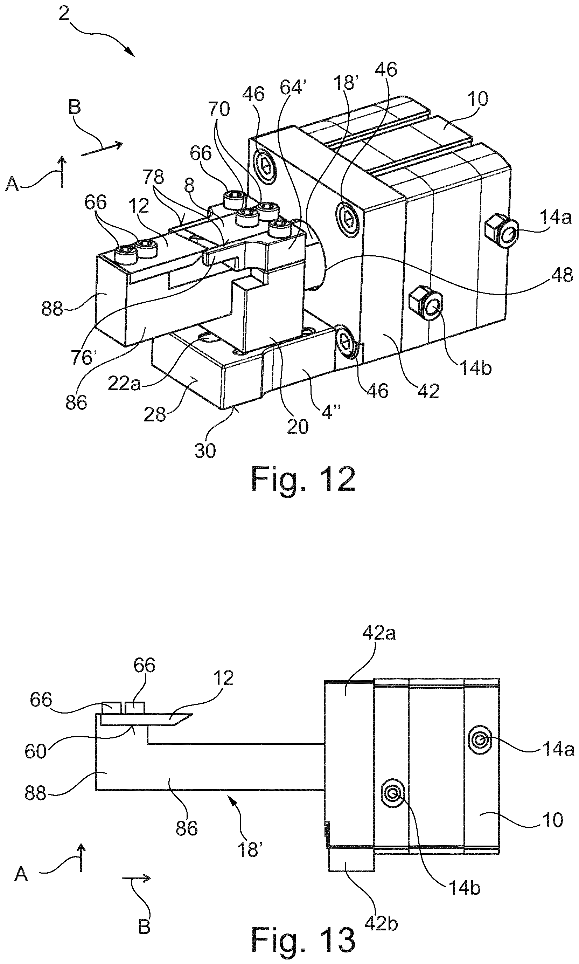

Nachfolgend ist anhand der Figuren 12 bis 14 eine zweite alternative Zusammenstellung des Schneidsystems 2 näher erläutert. Der Wesentliche Unterschied in diesem Ausführungsbeispiel ist, dass das Angussteil von dem Hubantrieb 10 nicht schiebend oder drückend abgetrennt wird, sondern insbesondere ziehend. Mit anderen Worten wird das Trennmesser 12 während eines Abtrennvorgangs auf den Hubantrieb 10 hinzubewegt, das bedeutet, dass die Bewegungsrichtung B im Vergleich zu den vorstehenden Ausführungsbeispielen im Wesentlichen invertiert ist. Zu diesem Zwecke sind die relativen Positionen des Trennmessers 12 und des Gegenlagers 8 miteinander vertauscht. In diesem Ausführungsbeispiel ist das Gegenlager 8 insbesondere als ein Gegenmesser ausgeführt, welches an den Führungsblock 20 befestigt wird.

Das Gleitelement 18' ist in dieser Ausführung etwa L-förmig, wobei der vertikale L-Schenkel 86 entlang der Bewegungsrichtung B orientiert ist und der horizontale L-Schenkel 88 sich entlang der Axialrichtung A erstreckt. Der Absatz 60 zur Befestigung des Trennmessers 12 ist hierbei an der Oberseite des vertikalen L-Schenkels 88 angeordnet, wobei die Klinge des Trennmessers 12 zum Hubantrieb 10 hin gerichtet orientiert ist. Mit anderen Worten weist das Gleitelement 18' in Verbindung mit dem Trennmessers 12 eine etwa hakenähnliche Geometrie auf.

In diesem Ausführungsbeispiel ist der Auflagekörper 6 im Wesentlichen in einen Führungsdeckel 64' integriert. Der Führungsdeckel 64' ist im Gegensatz zu dem plattenartigen Führungsdeckel 64 mit einer größeren axialen Dicke ausgeführt, und weist in dieser Ausgestaltung zwei entgegen der Bewegungsrichtung B abstehende Auflagekanten 76' für das Werkstück auf.

Die Grundplatte 4" umfasst in dieser Ausführung im Wesentlichen lediglich die Befestigungsfläche 4a, da lediglich der Führungsblock 20 und die Flanschplatte 42 an der Grundplatte 4" befestigt werden. Dadurch ist das Schneidsystem 2 in dieser Ausgestaltungsform besonders platzsparend.

Die Erfindung ist nicht auf die vorstehend beschriebenen Ausführungsbeispiele beschränkt. Vielmehr sind auch andere Varianten der Erfindung von dem Fachmann hieraus ableitbar, ohne den Gegenstand der Erfindung zu verlassen.

Wesentlich ist, dass das Schneidsystem 2 eine Auflagefläche 78 aufweist, an der das Werkstück während eines Abtrennvorgangs abgestützt wird. Die Auflagefläche 78 ist hierbei vorzugsweise konturgetreu an das jeweilige Werkstück und/oder das abzutrennende Angussteil angepasst, und bei Bedarf austauschbar.

### Bezugszeichenliste

- 2: Schneidsystem
- 4, 4', 4": Grundplatte
- 4a, 4a': Befestigungsfläche
- 4b, 4b': Befestigungsschaft
- 6,6': Auflagekörper
- 8: Gegenlager/Gegenmesser
- 8': Gegenlager/Schneidkeil
- 10: Hubantrieb
- 12: Trennmesser
- 14a, 14b: Anschluss
- 16: Hubkolben
- 18, 18': Gleitelement
- 20: Führungsblock
- 22a, 22b: Führungsnut
- 24: Führungsnut
- 26: Oberseite
- 28: Stirnseite
- 30: Unterseite
- 32: Absatz
- 34: Vertiefung
- 36: Befestigungsschraube
- 38: Unterlegscheibe
- 40: Stirnseite
- 42: Flanschplatte
- 42a: Grundkörper
- 42b: Befestigungsfortsatz
- 44: Aussparung
- 46: Befestigungsschraube
- 48: Aussparung
- 50: Aussparung
- 52: Befestigungsschraube
- 54: Stirnseite
- 56: Aufnahme
- 58: Oberseite
- 60: Absatz
- 62: Führungsnut/Aussparung
- 64, 64': Führungsdeckel
- 66: Oberseite
- 68: Aufnahme
- 70: Befestigungsschraube
- 72: Unterseite
- 74: Führungskontur
- 76,76': Auflagekante
- 78: Auflagekontur/Auflagefläche
- 80: Seitenfläche
- 82: Werkstückaufnahme
- 84: Auflagefortsatz
- 86,88: L-Schenkel

- B: Hubrichtung/Bewegungsrichtung
- A: Axialrichtung
- M: Mittelachse

## Patentansprüche

1. Schneidsystem (2), insbesondere zum Abtrennen eines Angussteils von einem Werkstück, mit einer Grundplatte (4, 4', 4") mit einem daran feststehend angeordneten Auflagekörper (6, 6') mit einem Gegenlager (8, 8'), insbesondere in Form eines Gegenmessers, und mit einem in Richtung (B) des Gegenlagers (8) bewegbaren Trennmesser (12), wobei der Auflagekörper (6, 6') eine Auflagekontur (78) für das Werkstück aufweist, die mit der Oberseite des Gegenlagers (8, 8') bündig ist oder diese überragt,
**dadurch gekennzeichnet,**
- **dass** die Auflagekontur (78) beidseitig an dem Gegenlager (8) angeordnet ist und diesem in Richtung des Trennmessers (12) entlang der Richtung (B) übersteht, und
- **dass** der Auflagekörper (6, 6') modular austauschbar ist.

2. Schneidsystem (2) nach Anspruch 1, wobei die Auflagekontur (78) als linienartige Auflagekanten (76, 76') ausgestaltet ist, die beidseitig an dem Gegenlager (8) angeordnet sind.

3. Schneidsystem (2) nach Anspruch 2, wobei die Auflagekanten (76, 76') in einem Bereich einer durch das Gegenlager (8) und dem Trennmesser (12) gebildeten Schnittkante dem Gegenlager (8) in Richtung (B) des Trennmessers (12) überstehen.

4. Schneidsystem (2) nach einem der Ansprüche 1 bis 3, wobei das Gegenlager (8) des Auflagekörpers (6) austauschbar ist.

5. Schneidsystem (2) nach einem der Ansprüche 1 bis 4, wobei das Trennmesser (12) an einem Gleitelement (18, 18') angebracht ist, das zumindest teilweise in einem feststehend an der Grundplatte (4, 4', 4") angeordneten Führungsblock (20) gelagert ist.

6. Schneidsystem (2) nach Anspruch 5, wobei der Führungsblock (20) eine das Gleitelement (18, 18') aufnehmende Aussparung (62), sowie einen die Aussparung (62) und das Gleitelement (18, 18') überdeckenden Führungsdeckel (64, 64') aufweist.

7. Schneidsystem (2) nach Anspruch 1 bis 6, wobei das Trennmesser (12), insbesondere mittels des Gleitelements (18, 18'), an einen Hubantrieb (10) gekoppelt ist.

8. Schneidsystem (2) nach Anspruch 7, wobei der Hubantrieb (10) mittels einer Flanschplatte (42) an der Grundplatte (4, 4', 4") befestigt ist.

9. Schneidsystem (2) nach einem der Ansprüche 5 bis 8, wobei die Grundplatte (4, 4', 4") mindestens eine Führungsnut (22a, 22b, 24) aufweist, an welcher der Auflagekörper (6, 6') und/oder der Führungsblock (20) verschiebbar befestigt ist.

10. Schneidsystem (2) nach Anspruch 9, wobei der Auflagekörper (6, 6') grundplattenseitig eine Fügekontur (74) aufweist, die nach Art einer Nut-Feder-Verbindung in der Führungsnut (24) einliegt.

11. Schneidsystem (2) nach einem der Ansprüche 1 bis 10, wobei das Trennmesser (12) linear gegenüber dem Gegenlager (8) bewegbar ist.

12. Schneidsystem (2) nach einem der Ansprüche 5 bis 11, wobei der Auflagekörper (6) des Gegenlagers (8) in den Führungsblock (20) des Gleitelements (18), insbesondere in den Führungsdeckel (64') des Führungsblocks (20), integriert ist.

13. Schneidsystem (2) nach einem der Ansprüche 1 bis 12, wobei das Gegenlager (8') als ein eine Werkstückaufnahme (82) des Auflagekörpers (6') überdeckender Schneidkeil ausgeführt ist.

## Claims

1. Cutting system (2), in particular for severing a sprue part from a workpiece, with a base plate (4, 4', 4") with a support body (6, 6') fixedly arranged thereon with a counter bearing (8, 8'), in particular in the form of a counter knife, and with a cutting blade (12) movable in the direction (B) of the counter bearing (8), wherein the support body (6, 6') comprises a support contour (78) for the workpiece which is flush-mounted with or projects beyond the upper side of the counter bearing (8, 8'),
**characterized in**
- **that** the support contour (78) is arranged on both sides of the counter bearing (8) and projects beyond said counter bearing in the direction of the cutting blade (12) along the direction (B), and
- **that** the support body (6, 6') is modularly exchangeable.

2. Cutting system (2) according to claim 1, wherein the support contour (78) is designed as line-like support edges (76, 76') which are arranged on both sides of the counter bearing (8).

3. Cutting system (2) according to claim 2, wherein the support edges (76, 76') project from the counter bearing (8) in the direction (B) of the cutting blade (12) in a region of a cutting edge formed by the counter bearing (8) and the cutting blade (12).

4. Cutting system (2) according to one of claims 1 to 3, wherein the counter bearing (8) of the support body (6) is exchangeable.

5. Cutting system (2) according to one of claims 1 to 4, wherein the cutting blade (12) is attached to a sliding element (18, 18') which is mounted at least partially in a guide block (20) fixedly arranged on the base plate (4, 4', 4").

6. Cutting system (2) according to claim 5, wherein the guide block (20) comprises a recess (62) receiving the sliding element (18, 18'), and a guide cover (64, 64') covering the recess (62) and the sliding element (18, 18').

7. Cutting system (2) according to claims 1 to 6, wherein the cutting blade (12) is coupled to a lifting drive (10), in particular by means of the sliding element (18, 18').

8. Cutting system (2) according to claim 7, wherein the lifting drive (10) is attached to the base plate (4, 4', 4") by means of a flange plate (42).

9. Cutting system (2) according one of claims 5 to 8, wherein the base plate (4, 4', 4") comprises at least one guide groove (22a, 22b, 24) to which the support body (6, 6') and/or the guide block (20) is displaceably fastened.

10. Cutting system (2) according to claim 9, wherein the support body (6, 6') comprises a joining contour (74) on the base plate side, which lies in the guide groove (24) in the manner of a tongue-and-groove connection.

11. Cutting system (2) according to one of claims 1 to 10, wherein the cutting blade (12) is linearly movable relative to the counter bearing (8).

12. Cutting system (2) according to one of claims 5 to 11, wherein the support body (6) of the counter bearing (8) is integrated into the guide block (20) of the sliding element (18), in particular into the guide cover (64') of the guide block (20).

13. Cutting system (2) according to one of claims 1 to 12, wherein the counter bearing (8') is designed as a cutting wedge covering a workpiece receptable (82) of the support body (6').

## Revendications

1. Système de coupe (2), notamment pour séparer une carotte d'une pièce, avec une plaque de base (4, 4', 4") avec un corps d'appui (6, 6') disposé de manière fixe sur ladite plaque de base, avec un contre-palier (8, 8'), notamment sous la forme d'un contre-couteau, et avec une lame de coupe (12) mobile dans la direction (B) du contre-palier (8), le corps d'appui (6, 6') comportant un contour d'appui (78) pour la pièce qui affleure ou dépasse la face supérieure du contre-palier (8, 8'),
**caractérisé en ce**
- **que** le contour d'appui (78) est disposé des deux côtés du contre-palier (8) et dépasse de celui-ci en direction de la lame de séparation (12) dans la direction (B), et
- **que** le corps d'appui (6, 6') est interchangeable de manière modulaire.

2. Système de coupe (2) selon la revendication 1, dans lequel le contour de support (78) est conçu comme des arêtes de support linéaires (76, 76') qui sont disposées des deux côtés du contre-palier (8).

3. Système de coupe (2) selon la revendication 2, dans lequel les arêtes d'appui (76, 76') font saillie du contre-palier (8) dans une zone d'une arête de coupe formée par le support (8) et la lame de coupe (12) dans la direction (B) de la lame de coupe (12).

4. Système de coupe (2) selon l'une des revendications 1 à 3, dans lequel le contre-appui (8) du corps d'appui (6) est interchangeable.

5. Système de coupe (2) selon l'une des revendications 1 à 4, dans lequel la lame de coupe (12) est fixée à un élément coulissant (18, 18') qui est monté au moins partiellement dans un bloc de guidage (20) disposé de manière fixe sur la plaque de base (4, 4', 4").

6. Système de coupe (2) selon la revendication 5, dans lequel le bloc de guidage (20) comporte un évidement (62) recevant l'élément coulissant (18, 18'), et un couvercle de guidage (64, 64') recouvrant l'évidement (62) et l'élément coulissant (18, 18').

7. système de coupe (2) selon les revendications 1 à 6, dans lequel la lame de coupe (12) est couplée à un entraînement de levage (10), notamment au moyen de l'élément coulissant (18, 18').

8. Système de coupe (2) selon la revendication 7, dans lequel l'entraînement de levage (10) est fixé à la plaque de base (4, 4', 4") au moyen d'une plaque à bride (42).

9. Système de coupe (2) selon l'une des revendications 5 à 8, dans lequel la plaque de base (4, 4', 4") comporte au moins une rainure de guidage (22a, 22b, 24) à laquelle le corps d'appui (6, 6') et/ou le bloc de guidage (20) est fixé de manière déplaçable.

10. Système de coupe (2) selon la revendication 9, dans lequel le corps d'appui (6, 6') comporte au côté de la plaque de base un contour de jonction (74) qui est inséré dans la rainure de guidage (24) à la manière d'une liaison à rainure et languette.

11. Système de coupe (2) selon l'une des revendications 1 à 10, dans lequel la lame de coupe (12) est mobile linéairement par rapport au contre-palier (8).

12. Système de coupe (2) selon l'une des revendications 5 à 11, dans lequel le corps d'appui (6) du contre-palier (8) est intégré dans le bloc de guidage (20) de l'élément coulissant (18), notamment dans le couvercle de guidage (64') du bloc de guidage (20).

13. Système de coupe (2) selon l'une des revendications 1 à 12, dans lequel le contre-palier (8') est conçu comme un coin de coupe recouvrant un logement de pièce (82) du corps d'appui (6').
